Europäisches Patentamt

European Patent Office

Office européen des brevets

(11) Publication number: 0 432 679 A2

# EUROPEAN PATENT APPLICATION

(21) Application number: 90123675.2

(22) Date of filing: 10.12.90

(51) Int. Cl.5: **B32B 3/18, B32B 25 04**

(30) Priority: 15.12.89 IT 2272289

(43) Date of publication of application:
19.06.91 Bulletin 91/25

(84) Designated Contracting States:
DE FR GB SE

(71) Applicant: INDUSTRIE PIRELLI S.p.A.
Piazzale Cadorna, 5
I-20123 Milan(IT)

(72) Inventor: Ferraro, Ferdinando
Viale Campania, 30
I-20133 Milan(IT)
Inventor: Cigognini, Adelio
Piazza S. Giuseppe 13
I-20162 Milan(IT)

(74) Representative: Giannesi, Pier Giovanni et al
Pirelli S.p.A. Direzione Brevetti Piazzale
Cadorna, 5
I-20123 Milano(IT)

(54) Ceramic fiber panel having a high resistance to perforation and related manufacturing process.

(57) The ceramic fibre panel having a high resistance to perforation comprises asheet-like element for supporting a plurality of tiles in ceramic material and adhesive substances to hold the tiles against the sheet-like element itself; between the tiles and the sheet-like element there is also present a substrate of elastomeric material.

Fig. 1

# CERAMIC FIBRE PANEL HAVING A HIGH RESISTANCE TO PERFORATION AND RELATED MANUFACTURING PROCESS

The present invention relates to a ceramic fibre panel having a high resistance to perforation and to the related manufacturing process.

As is known different typologies of high resistance panels are currently utilized for the most disparate uses and especially from the ballistic viewpoint.

There are known for example panels of the ceramic fibre type generally composed of a plate-like element, defined by superimposed sheets of fabric impregnated with thermosetting resin, whose material is patented under the tradename "kevlar".

With the plate-like element there are then associated, by means of adhesive substances of a known type, a plurality of ceramic tiles whose material being of the vitreous type has a considerable resistance to perforation, say of a projectile or such like, but, on the other hand, a considerable fragility.

For example, in the case of vehicles, it is possible to use the above mentioned panels to protect the critical areas of the armour of an armoured vehicle such as a tank.

The ceramic fibre panel, during the association of the ceramic tiles with the sheet-like element in "kevlar", by means of adhesive substances, must, in addition to particular treatments, necessarily be subjected to a preset pressure.

Due to the small dimensional variations of one tile with respect to the other, the application of a preset pressure to the panel generates a considerable increase in pressure in localized areas of the tiles and in particular in the areas where these protrude with respect to the others causing cracks in or breakage of one or more of the tiles with the consequent rejection of the entire panel.

Even by varying the layer of adhesive substance to absorb any protrusion of one tile with respect to the other, the drawback is not eliminated for, when the panel is finished, as the tiles' support constituted by the adhesive alone applied in massive quantities, has the two in drawback:

a) of stronly lowering the characteristics of adhesion between panel and tiles;

b) of representing too fragile a support for the tiles, thus exposed to the possibility of cracks which, in turn drastically reduce the tile's impact resistance.

If, on the other hand, the thickness of the adhesive is reduced, this would, in addition to having a poor adhesion of the tiles on the sheet-like element, entail the breakage of the latter, as already said, due to the difference in thickness between one tile and another.

The application of the above panels to armoured vehicles, such as, say, a tank, has also highlighted a further drawback due to the fact that there is no protection of the external surface of the tiles against impacts or bodies which are projected against them during the movement of the tank.

Moreover, as also regards the sheet-like element in "kevlar" which faces the part in motion of the tank and more accurately the crawler track, a protection against an aggressive chemical/physical environment is necessary in addition to protection against stones and mud which are thrown against it causing severe abrasion during the movement of the tank over rough and muddy terrain.

In this situation the technical task at the base of the present invention is to overcome the above drawbacks other known art.

Within the scope of this technical task it is an important object of the present invention to conceive a ceramic fibre panel having a high resistance to perforation which is above all suitable from a ballistic point of view exhibiting a valid destabilizing effect of the projectile.

A further important object of the present invention is to conceive a ceramic fibre panel having a high resistance to perforation which does not delaminate when subjected to pressure during its manufacture.

Not the least object of the present invention is to accomplish a ceramic fibre panel having a high resistance to perforation which, for a given weight of panels of a known type, is ballistically more effective.

This task as well as these and other objects are attained by a ceramic fibre panel having a high resistance to perforation comprising a sheet-like element supporting a plurality of tiles in ceramic material and adhesive substances for holding said tiles against said sheet-like element, characterized in that between said sheet-like element and said tiles it comprises at least one substrate of elastomeric material.

Further features and advantages of the invention shall be made more evident by the description of a preferred but not exclusive embodiment of the ceramic fibre panel according to the invention illustrated as an indicative and non-limiting example in the enclosed drawing, wherein:

Fig. 1 is a schematic view showing a particular type of use of the ceramic fibre panel having a high resistance according to the invention; and

Fig. 2 is a partially sectioned transverse view of the ceramic fibre panel according to the invention.

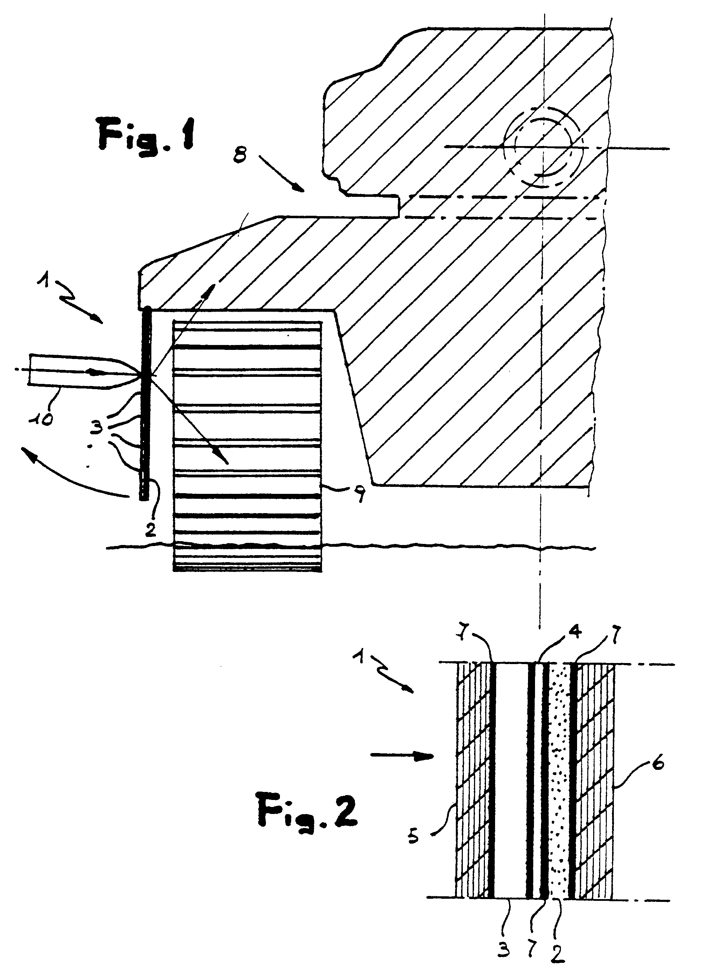

With reference to the figures described the ceramic fibre panel according to the invention, indicated as a whole with reference number 1, comprises a sheet-like element 2 whose trade name is "kevlar" to which, by means of elastomeric adhesive substances, there are associated a plurality of tiles, each indicated with 3, in ceramic material.

Suitably between the tiles and the "kevlar" the panel comprises at least one substrate of elastomeric material 4.

Hereinafter the term "substrate" shall indicate a limited-thickness element, thus in the form of a film or screen or sheet or also of a layer having a thickness of the order of hundredths or tenths of a millimeter and in any case at most with a thickness equal to 1.5 mm, and preferably with thicknesses ranging from 0.05 mm to 1.5 mm and even more preferably, as in the example considered, with a thickness of 100.3 mm.

The presence of the substrate of elastomeric material between the tiles and the "kevlar" provides two very important advantages.

The first advantage which derives from the use of the substrate of elastomeric material is that the latter works so to speak like a "cushion" so as to prevent the pressure exerted on the tiles during the formation of the panel from increasing enormously in the localized areas of the tiles which are not aligned due to the small dimensional differences one with respect to the others, causing their breakage.

The second advantage is related to the fact that once the panel is finished, the substrate of elastomeric material determines a sufficiently rigid support for the tiles, thus preventing the latter from breaking or cracking when they are subjected to small impacts or such like during the utilization of the panel.

More in particular the substrate of elastomeric material, as a non-limiting example of realization, comprises a mix based on natural or synthetic rubber or of polyurethanes or urethanes.

In the case of natural rubber the mix comprises in proportion:

- 0.6 g of accelerating substances, 1 g of lubricating substances,
- 0.5 g of antioxidising substances,
- 50 g of reinforcing filler,
- 1 g of stearicacid,
- 4 g of aromatic oil, 5 g of ZnO and 2.5 g of S.

The sheet-like element has a thickness ranging from 3 to 12 mm and in particular a thickness of 6 mm while the thickness of the adhesive substances which ranges from 20 to 50 g/m has given the best results with a thickness of about 30 g/m.

The tiles used for the purpose and which allow the best results from the ballistic point of view have a thickness of not less than 9 mm and a density higher than 3.6 g/cc.

The panel now described can constitute a protection for land-based vehicles or inside buildings and such like or again inside aircraft.

To also avoid that, due to impact or to bodies which are projected against the tiles, the latter from cracking or breaking, thus failing in their primary function, a first protective layer in elastomeric material 5 is associated with them.

A second protective layer 6 in elastomeric material is in addition also associated with the external surface of the sheet-like element in "kevlar" so that the latter is not subjected to rapid deterioration due to abrasive substances which are projected against the same, or to chemically aggressive substances (such as, say, mustard gas) or particulary aggressive atmospheric agents (such as, say, the sun and ice).

In particular the first and second protective layer in elastomeric material are defined by a mix comprising in 10 proportion as an example 50 g of natural rubber and 50 g of chlorosulphonated rubber, 3 g of zinc oxide, 3 g of magnesium oxide, 1 g of sulphur, 1 g of accelerating and antioxidising substances, 30 g of a reinforcing filler, 6 g of titanium bioxide and chrome green, 1 g of red iron oxide, 3 g of yellow iron oxide and 0.45 g of black.

The process for the formation of the panel having a high resistance to perforation consists essentially inindividually pretreating the surfaces of the sheet-like element and of the tiles by means of a sandblasting and degreasing operation before their reciprocal association.

When the surfaces of the tiles and of the sheet-like element in "kevlar" are prepared there is applied to them a layer of adhesive substances 7 such as, say, as already mentioned, an elastomeric adhesive.

Excellent results have, however, also been obtained with a twin-component epoxy-based adhesive or with a single-component polyester adhesive as regards detachment and energy dissipation.

Subsequently to the sheet-like element in "kevlar" after having applied a layer of adhesive substance there is associated a substrate of elastomeric material which, asalready said, can be of either natural or synthetic rubber or again a mix of polyurethanes or urethanes.

After having applied on the substrate of elastomeric material a layer of adhesive substance the tiles are applied to the latter thus obtaining a composite panel.

Subsequently the composite panel is subjected to a preheating operation for an extremely short time and at a preset temperature.

Subsequently a compression is executed of the composite panel at a preset pressure and time at a temperature which is substantially the same as the preheating temperature.

Lastly the composite panel is cooled, say, by circulation of well water in the press plates, down to a temperature which is substantially the same as room temperature for a preset time and while still subjected to a pressure equal to the compression pressure.

As a non-limiting example the panel's preheating operation is executed at a pressure equal to 0 and at a temperature of 143C for 1 minute.

The compression operation is executed at a pressure of 35 bar at a temperature of 143 Cf or 55 minutes.

The cooling operation occurs by keeping the pressure constant at 35 bar until a temperature of about 15° C is reached for a time of 35 minutes.

Suitably inside the dies for exerting the required pressure and heating on the panel, antiadhesive substances may also be used to prevent any adhesion between the panel and the surfaces of the dies themselves.

If in the case taken as an example the panel is also to be used prevalently on armoured vehicles, such as tanks 8 provided with tracks 9, both on the outer face of the tiles and on the external surface of the sheet-like element in "kevlar" as already specified, there are associated again by means of adhesive substances of the type already mentioned, a first and a second protective layer again in elastomeric material.

The invention thus conceived is susceptible to numerous changes and variants all falling within the scope of the inventive concept; in addition, all details may be replaced by technically equivalent elements.

In practice the material used as well as the dimensions may be of any value whatsoever according to there quirements and to the state of the art.

## Claims

1. Ceramic fibre panel having a high resistance to perforation comprising a sheet-like element supporting a plurality of tiles in ceramic material and adhesive substances for holding said tiles against said sheet-like element, characterized in that between said sheet-like element and said tiles it comprises at least one substrate of elastomeric material.

2. Panel according to claim 1, characterized in that said substrate of elastomeric material has a thickness ranging from 0.05 mm to 1.5 mm.

3. Panel according to claim 1, characterized in that the thickness of said sheet-like element ranges from 3 mm to 12 mm.

4. Panel according to claim 1, characterized in that the quantity of adhesive quantities ranges from 20 to 50 g/m.

5. Panel according to one or more of the preceding claims, characterized in that said substrate of elastomeric material is a mix based on natural or synthetic rubber.

6. Panel according to one or more of the preceding claims, characterized in that said substrate of elastomeric material is a mix based on polyurethanes or urethanes.

7. Panel according to one or more of the preceding claims, characterized in that it comprises at least one first protective layer of elastomeric material associated with the external surface of said tiles.

8. Panel according to one or more of the preceding claims, characterized in that it comprises at least one second protective layer of elastomeric material associated with the external surface of said sheet-like element.

9. Panel according to claim 1, characterized in that said tiles have a thickness of at least 9 mm.

10. Process for the formation of a ceramic fibre panel having a high resistance to perforation, characterized in that it consists of: associating by means of adhesive substances a plurality of ceramic tiles to a sheet-like element supporting the same by placing between said tiles and said sheet-like element at least one layer of elastomeric material to obtain a composite panel, subjecting said composite panel to a preheating operation, compressing said composite panel in a uniform manner for a predetermined time and temperature and cooling said panel to a preset temperature.

11. Process according to claim 10, characterized in that said cooling process of said composite panel is executed during the compression of same.

12. Process according to claim 10, characterized in that said sheet-like element, said plurality of ceramic tiles have their surfaces pretreated by means of a sand blasting and degreasing operation before their reciprocal association.

13. Process according to claim 10, characterized in that the external surfaces of said composite panel during said compression and said cooling process are in contact with adhesive substances.

14. Process according to claim 10, characterized in that there is associated by means of adhesive substances externally to the tiles and to the sheet-like element at least one layer of elastomeric material even before subjecting the panel to the preheating and to the compression processes.

Fig.1

Fig.2